(19) Europäisches Patentamt

European Patent Office

Office européen des brevets

(11) **EP 4 538 892 A1**

(12) **EUROPEAN PATENT APPLICATION**

(43) Date of publication:
**16.04.2025  Bulletin 2025/16**

(21) Application number: **24202627.6**

(22) Date of filing: **25.09.2024**

(51) International Patent Classification (IPC):
*G06F 11/20* (2006.01)    *G06N 20/00* (2019.01)

(52) Cooperative Patent Classification (CPC):
**G06N 20/00; G06F 11/2041; G06F 11/2046;**
G06F 2201/815; G06F 2201/84

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **20.12.2023  CN 202311767093**

(71) Applicant: **Beijing Baidu Netcom
Science Technology Co., Ltd.
Beijing 100085 (CN)**

(72) Inventors:
• **YU, Dianhai
Beijing, 100085 (CN)**
• **TIAN, Gexiao
Beijing, 100085 (CN)**

• **GONG, Weibao
Beijing, 100085 (CN)**
• **WANG, Haifeng
Beijing, 100085 (CN)**
• **XU, Yongsheng
Beijing, 100085 (CN)**
• **YANG, Jiabin
Beijing, 100085 (CN)**

(74) Representative: **Maiwald GmbH
Elisenhof
Elisenstraße 3
80335 München (DE)**

Remarks:
In accordance with Article 14(2), second sentence
EPC the applicant has filed a text with which it is
intended to bring the translation into conformity with
the original text of the application.

(54) **CLUSTER-BASED TRAINING METHOD AND APPARATUS, ELECTRONIC DEVICE AND
STORAGE MEDIUM**

(57)    A cluster-based training method includes: in response to a hardware fault in the training node, selecting a target standby node from the plurality of standby nodes, and obtaining a target training snapshot of the model training task in the training node, in which the target training snapshot includes training state data of the model training task; and initializing the target standby node based on a container image of a model training program in the training node and the training state data to replace the training node with the target standby node to continue executing the model training task.

EP 4 538 892 A1

**Description**

## TECHNICAL FIELD

The disclosure relates to a field of data processing technology, specifically to fields of artificial intelligence (AI) and deep learning, and in particular to a cluster-based training method, a cluster-based training apparatus, an electronic device and a storage medium.

## BACKGROUND

With the continuous development of artificial intelligence (AI), the demand for model training is also increasing.
For training scenarios with higher computing power requirements, such as large-model training scenarios, in order to improve the training efficiency of the large-model, relevant researchers propose to use a cluster to train the large model. However, when using the cluster to train the large model, although the cluster provides a higher computing power, which improves the model training efficiency to a certain extent, a fault of a single node in the cluster may cause the cluster to stop the training operation, which in turn affects the model training efficiency. Therefore, it is necessary to further improve the model training efficiency when using the cluster to train the model.

## SUMMARY

The disclosure provides a cluster-based training method, a cluster-based training apparatus, a device and a storage medium.
According to a first aspect of the disclosure, a cluster-based training method is provided. The cluster includes a training node for executing a model training task and a plurality of standby nodes. The method includes:

in response to a hardware fault in the training node, selecting a target standby node from the plurality of standby nodes, and obtaining a target training snapshot of the model training task in the training node, in which the target training snapshot includes training state data of the model training task; and
initializing the target standby node based on a container image of a model training program in the training node and the training state data to replace the training node with the target standby node to continue executing the model training task.

According to a second aspect of the disclosure, a cluster-based training apparatus is provided. The cluster includes a training node for executing a model training task and a plurality of standby nodes. The apparatus includes:

a first responding module, configured to, in response to a hardware fault in the training node, select a target standby node from the plurality of standby nodes, and obtain a target training snapshot of the model training task in the training node, in which the target training snapshot includes training state data of the model training task; and
an initializing module, configured to initialize the target standby node based on a container image of a model training program in the training node and the training state data to replace the training node with the target standby node to continue executing the model training task.

The disclosure provides a cluster-based training method, a cluster-based training apparatus and an electronic device with the following beneficial effects. In the disclosure, in response to the hardware fault in the training node, the target standby node is selected from the plurality of standby nodes, and the target training snapshot of the model training task in the training node is obtained, in which the target training snapshot includes training state data of the model training task. The target standby node is initialized based on a container image of the model training program in the training node and the training state data to replace the training node with the target standby node to continue executing the model training task. Based on this, in the disclosure, when there is a hardware fault in the training node, the target standby node may be initialized extremely fast based on the container image and the target training snapshot, so that the target standby node may quickly replace the training node and continues to execute the model training task, thereby shortening a fault recovery time and improving a model training efficiency.
It should be understood that the content described in this section is not intended to identify key or important features of the embodiments of the disclosure, nor is it intended to limit the scope of the disclosure. Additional features of the disclosure will be easily understood from the following description.

## BRIEF DESCRIPTION OF THE DRAWINGS

The accompanying drawings are used to better understand this solution and do not constitute a limitation to the disclosure.

FIG. 1 is a flowchart of a cluster-based training method according to an embodiment of the disclosure.

FIG. 2 is a flowchart of a cluster-based training method according to another embodiment of the disclosure.

FIG. 3 is a flowchart of a cluster-based training method according to another embodiment of the disclosure.

FIG. 4 is a schematic diagram of a cluster-based training apparatus according to an embodiment of the disclosure.

FIG. 5 is a block diagram of an electronic device configured to implement a cluster-based training method of an embodiment of the disclosure.

## DETAILED DESCRIPTION

The following description of exemplary embodiments of the disclosure is provided in combination with the accompanying drawings, which includes various details of the embodiments of the disclosure to aid in understanding, and should be considered merely exemplary. For the sake of clarity and brevity, descriptions of well-known functions and structures are omitted from the following description.

A cluster-based training method, a cluster-based training apparatus, and an electronic device of the embodiments of the disclosure are described below with reference to the accompanying drawings.

It is noted that an execution subject of the cluster-based training method of the embodiment is the cluster-based training apparatus, and the cluster-based training apparatus may be implemented by means of software and/or hardware and may be configured in the electronic device.

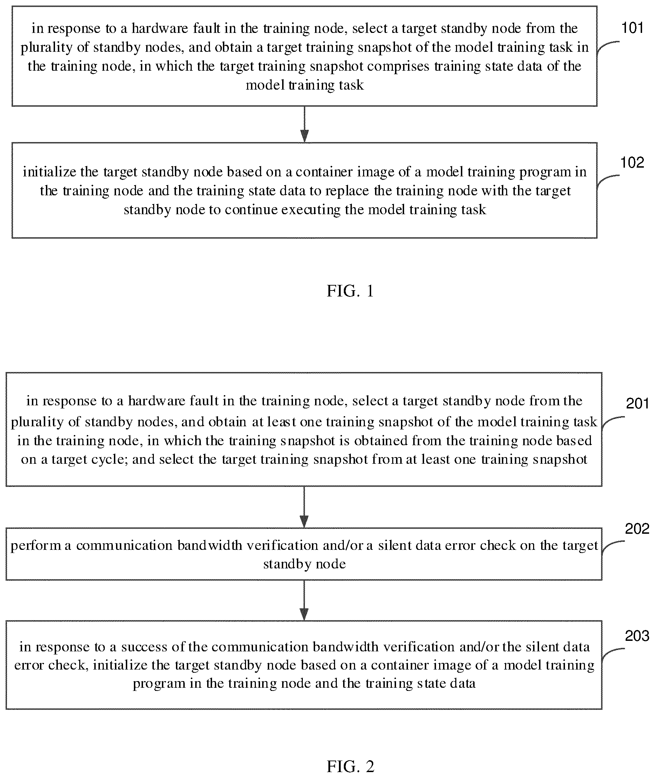

FIG. 1 is a flowchart of a cluster-based training method according to an embodiment of the disclosure.

The cluster includes a training node for executing a model training task and a plurality of standby nodes. There may be one or more training nodes included in the cluster. When there are a plurality of training nodes included in the cluster, one model may be trained through the plurality of training nodes, and each training node takes on a portion of the training task of the model.

The training node and the standby node may refer to nodes that have passed a pressure test, for example, nodes that have passed a communication unit pressure test, a computing unit pressure test, and a model end-to-end pressure test. A cycle for performing the pressure test on the node may be determined by a user according to an actual needs.

As illustrated in FIG. 1, the cluster-based training method includes the following steps.

At step 101, in response to a hardware fault in the training node, a target standby node is selected from the plurality of standby nodes, and a target training snapshot of the model training task in the training node is obtained, in which the target training snapshot includes training state data of the model training task.

Optionally, the hardware fault may refer to a fault of hardware in the training node. As an example rather than a limitation, the hardware may refer to a graphics processing unit (GPU), a central processing unit (CPU), and a network card, etc.

Optionally, selecting the target standby node from the plurality of standby nodes includes: randomly selecting a standby node from the plurality of standby nodes as the target standby node.

In order to improve an utilization of nodes and make full use of node resources, generally, the standby nodes are not in an idle state, i.e., the standby nodes generally execute other tasks besides the model training task.

Optionally, selecting the target standby node from the plurality of standby nodes, includes: obtaining a priority of the standby node, in which the priority indicates a degree of importance of the other tasks; and selecting the target standby node from the plurality of standby nodes based on the priority.

The target standby node is selected based on the priority, which, on the one hand, may avoid the other tasks that are relatively important and currently being executed in the standby nodes to be terminated, and on the other hand, ensure a high availability of the cluster and improve the utilization of the nodes.

Assuming that the higher the priority, the more important the task executed by the standby node. When selecting the target standby node based on the priority, the target standby node may be selected in an ascending order of the priority. When there is no low-priority standby node or the low-priority standby node is unavailable, the high-priority standby node is selected as the target standby node.

As an example rather than a limitation, assuming that the priorities of the plurality of standby node may include A and B, and A is higher than B. When selecting the target standby node, the standby node with the priority B may be preferentially selected as the target standby node. When there is no standby node with the priority B or the standby node with the priority B is unavailable, the standby node with the priority A may be selected as the target standby node. An amount of standby nodes with the priority A may be greater than an amount of standby nodes with the priority B.

For GPU hardware, if the GPU fails, there is a high probability that the GPU will fail again during subsequent use. In order to reduce an overall fault frequency of the cluster and improve a training efficiency, the disclosure proposes that GPUs that have failed in the past may be centrally deployed in one or more nodes, and such node may be used as the standby node with low-priority for preferentially scheduling.

Optionally, the disclosure includes: obtaining a pre-estimated availability of the cluster and a pre-estimated amount of fault nodes per unit of time; and determining an amount of standby nodes according to the pre-estimated availability and the pre-estimated amount.

In an optional implementation, the amount of standby nodes can be obtained by Poisson fitting based on the pre-estimated availability and the pre-estimated amount.

As an example rather than a limitation, the amount of standby nodes may be determined according to the following formula:

$$\alpha = \sum_{k=0}^{x} \frac{e^{-\mu} \mu^{k}}{k!}$$

where $\alpha$ represents the pre-estimated availability, $\mu$ represents the pre-estimated amount, and x represents the amount of standby nodes to be solved, the amount of standby nodes x may be obtained by solving the above equation.

The pre-estimated amount of fault nodes per unit of time may be obtained based on historical data statistics, or obtained by converting a pre-estimated fault frequency of the cluster.

The amount of standby nodes is determined based on the pre-estimated availability and the pre-estimated amount, so that the standby nodes may cover the fault nodes, thereby achieving the high availability of the cluster.

Optionally, the target training snapshot may refer to a training snapshot of the model training task when the hardware fault occurs in the training node, or a training snapshot of the model training task at a certain moment before the hardware fault occurs in the training node.

The training state data of the model training task included in the target training snapshot may refer to data such as training data state, model parameter and optimizer state. The training data state is configured to indicate whether the training data has been used or not. Based on the training data state, the target standby node may train the model directly based on the unused training data, thereby avoiding repeated training of the model based on the same training data.

At step 102, the target standby node is initialized based on a container image of a model training program in the training node and the training state data to replace the training node with the target standby node to continue executing the model training task.

The container image of the model training program may be pre-set. The container image may be deployed in the target standby node after the target standby node is determined, thereby improving a deployment speed of the model training program.

After the container image is deployed, data configuration may be performed on the target standby node based on training state data.

The process of initializing the target standby node may be understood as seizing the resources of the target standby node to execute the model training task.

The target standby node is initialized based on the container image and the training state data, which may automatically perform hardware fault recovery, shorten hardware fault recovery time, and improve hardware fault recovery efficiency.

In the embodiments of the disclosure, in response to the hardware fault in the training node, the target standby node is selected from the plurality of standby nodes, and the target training snapshot of the model training task in the training node is obtained, in which the target training snapshot includes training state data of the model training task. The target standby node is initialized based on a container image of the model training program in the training node and the training state data to replace the training node with the target standby node to continue executing the model training task. Based on this, in the disclosure, when there is a hardware fault in the training node, the target standby node may be initialized extremely fast based on the container image and the target training snapshot, so that the target standby node may quickly replace the training node and continues to execute the model training task, thereby shortening a fault recovery time and improving a model training efficiency.

FIG. 2 is a flowchart of a cluster-based training method according to another embodiment of the disclosure.

As illustrated in FIG. 2, the cluster-based training method includes the following steps.

At step 201, in response to a hardware fault in the training node, a target standby node is selected from the plurality of standby nodes, and at least one target training snapshot of the model training task in the training node is obtained, in which the training snapshot is obtained from the training node based on a target cycle, and the target training snapshot is selected from at least one training snapshot.

After the training node executing the model training task, the training snapshot of the model training task is obtained periodically based on the target cycle, which may avoid data loss and invalid training problems causes by the hardware fault of the training node.

The cluster further includes a storage node. Optionally, obtaining the at least one training snapshot of the model training task in the training node, includes: according to the target cycle, controlling the training node to save the training snapshot to a memory of the training node based on a first process; controlling the training node to read the training snapshot from the memory and save the training snapshot to a solid state drive of the training node based on a second process; and controlling the training node to read the training snapshot from the solid state drive and send the training snapshot to the storage node based on a third process.

If the training node saves the training snapshot to the memory, the solid state drive and the storage node sequentially through only one process, the process may only return to execute other instructions after saving the training snapshot to the storage node, which leads to a low overall execution efficiency of programs.

The training snapshot may be obtained and stored asynchronously through a plurality of processes, which may avoid a blockage during executing the programs, thereby improving a concurrent performance of the programs.

Optionally, the target cycle may be determined by the user based on experience.

Optionally, the target cycle may also be determined by the following steps.

A single pre-estimated save overhead for the training snapshot of the model training task is obtained; a total save overhead function with the target cycle as a variable is constructed according to a set duration and the single pre-estimated save overhead; an invalid training overhead function with the target cycle as a variable is constructed; a target overhead function is determined according to the total save overhead function and the invalid training overhead function; and determining the target cycle by performing a solving process on the target overhead function.

As an example rather than a limitation, the single pre-estimated save overhead may refer to a corresponding save overhead when controlling the training node to save the training snapshot to the storage node through the three processes, or refer to an overhead of saving the training snapshot through other saving methods.

As an example rather than a limitation, the set duration may refer to an average duration from the training node beginning executing the model training task to the model training task being interrupted, or a duration determined by the user based on experience.

As an example rather than a limitation, the target cycle is determined according to the following equation:

$$argminH(t) = argmin(H_1(t) + H_2(t)) = argmin(\frac{T}{t} * c + \frac{t}{2})$$

where $H(t)$ represents a target overhead function; $H_1(t) = \frac{T}{t} * c$, $H_1(t)$ represents a total save overhead function; T represents a set duration; c represents a single pre-estimated save overhead; t represents the target cycle, which is a variable and is greater than 0; $H_2(t) = \frac{t}{2}$, $H_2(t)$ represents an invalid training overhead function, where the invalid training may refer to a training between the time when the training snapshot is last acquired before the occurrence of hardware fault and the time when hardware fault occurs. It should be noted that the coefficient of the variable $t$ in $H_2(t)$ may be determined according to an actual situation.

The target cycle is obtained by solving the minimum value of H(t). The above total save overhead and the invalid training overhead may be time overheads.

The target cycle obtained by solving the above equation is an optimal cycle that can balance the total save overhead and the invalid training overhead of the training snapshot and minimize the overhead in the model training process.

As an example rather than a limitation, the target cycle may also be determined according to the following equation:

$$argmin(f_{failure} * (\frac{T}{t} * c + \frac{t}{2}))$$

where $f_{failure}$ is a pre-estimated fault frequency of the training node during the execution of the model training task.

Optionally, selecting the target training snapshot from the at least one training snapshot includes: selecting the target training snapshot from the at least one training snapshot according to a corresponding training effect. The training effect may be determined according to a loss value corresponding to the training snapshot.

The training snapshot that corresponds to the best training result is selected as the target training snapshot, so that the target standby node can continue to execute the model training task based on the best model training result before the hardware fault occurs, which thus improves the model training efficiency and reduces a model training cost.

The training snapshot corresponds to an obtaining time. Optionally, selecting the target training snapshot from the at least one training snapshot, includes: obtaining a fault time corresponding to the hardware fault in the training node; and selecting a training snapshot with the shortest interval between the corresponding obtaining time and the fault time as the target training snapshot.

The training snapshot that is last obtained before the hardware fault occurs is selected as the target training snapshot, so that the target standby node can continue to execute the model training task based on the latest model training result, ensuring that model training has a continuity and reducing the invalid training overhead.

At step 202, a communication bandwidth verification and/or a silent data error check is performed on the target standby node.

Optionally, performing the communication bandwidth verification on the target standby node refers to verifying whether a communication bandwidth corresponding to the target standby node is greater than or equal to a bandwidth threshold. If the communication bandwidth is greater than or equal to the bandwidth threshold, the communication bandwidth verification passes. If the communication bandwidth is less than the bandwidth threshold, the communication bandwidth verification is failed. The communication bandwidth may be a collective communication bandwidth.

Optionally, performing the silent data error check on the target standby node refers to checking whether any silent data error exists in the target standby node. If there is no silent data error, the silent data error check passes. If there is the silent data error, the silent data error check is failed.

As an example rather than a limitation, the training node may be caused to perform a specific operation for multiple times, and operation results obtained are compared. If the operation results are the same, there is no silent data error in the training node. If there are at least two different operation results among the operation results, there is the silent data error in the training node.

By performing the communication bandwidth verification and/or silent data error check on the target standby node, risk monitoring for the performance of the target standby node may be realized, to avoid introducing a node with poor performance or a fault node, thereby reducing a probability of subsequent faults of the target standby node.

At step 203, in response to a success of the communication bandwidth verification and/or the silent data error check, the target standby node is initialized based on a container image of a model training program in the training node and the training state data.

The relevant contents in step 203 can be referred to the relevant description in step 102 and will not be repeated here.

In the embodiments of the disclosure, in response to the hardware fault in the training node, the target standby node is selected from the plurality of standby nodes, and at least one training snapshot of the model training task in the training node is obtained. The training snapshot is obtained from the training node based on the target cycle, and the target training snapshot is selected from the at least one training snapshot. The communication bandwidth verification and/or the silent data error check is performed on the target standby node. In response to the success of the communication bandwidth verification and/or the silent data error check, the target standby node is initialized based on the container image of the model training program in the training node and the training state data. Based on this, the at least one training snapshot is obtained according to the disclosure, which may avoid data loss and invalid training problems causes by the hardware fault of the training node. Moreover, by performing the communication bandwidth verification and/or the silent data error check on the target standby node, the risk monitoring of the performance of the target standby node may be realized to avoid introducing the node with poor performance or the fault node.

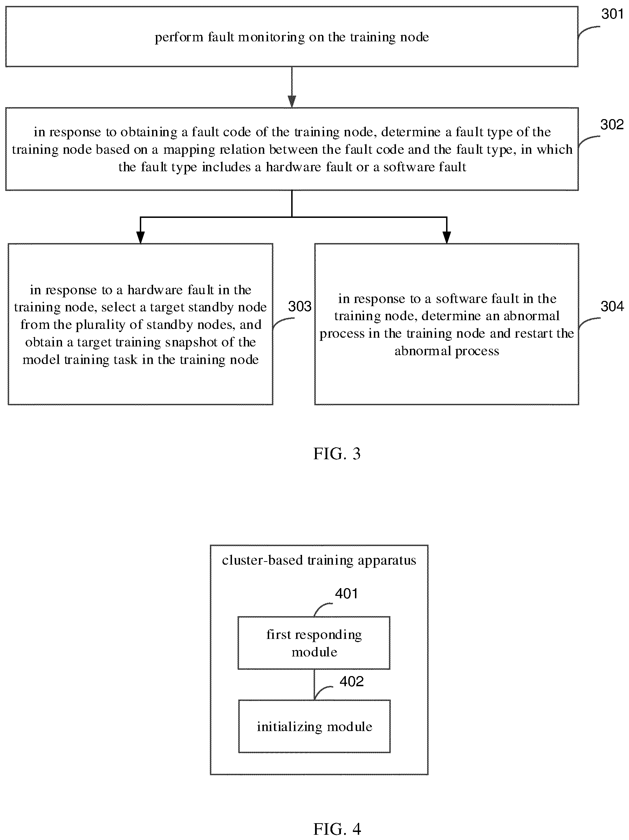

FIG. 3 is a flowchart of a cluster-based training method according to another embodiment of the disclosure.

As illustrated in FIG. 3, the cluster-based training method includes the following steps.

At step 301, fault monitoring is performed on the training node.

Optionally, monitoring may be performed on the model training program in the training node, i.e. to monitor whether the model training program fails and exits.

At step 302, in response to obtaining a fault code of the training node, a fault type of the training node is determined based on a mapping relation between the fault code and the fault type, in which the fault type includes a hardware fault or a software fault.

If it is monitored that the model training program has failed and exited, the corresponding fault code is obtained, and the fault type corresponding to the fault code is obtained based on the mapping relation to determine whether there is the hardware fault or the software fault in the training node.

The disclosure may achieve self-diagnosis of faults in both hardware and software. Whether it is a hardware fault or a software fault, a representation on the model training program is that the program fails and exits. Therefore, based on the fault code, rapid sensing for the fault may be achieved.

At step 303, in response to a hardware fault in the training node, a target standby node is selected from the plurality of standby nodes, and a target training snapshot of the model training task in the training node is obtained.

The monitoring for the hardware fault based on the fault code is more time-efficient than fault monitoring by scanning a hardware error log periodically.

There is also a mapping relation between the fault code and the hardware fault, so that the hardware with the fault may be located based on the fault code.

At step 304, in response to a software fault in the training node, an abnormal process in the training node is determined and the abnormal process is restarted.

There is also a mapping relation between the fault code and the software fault, and the abnormal process may be determined based on the fault code, and the abnormal process may further be restarted.

According to the disclosure, corresponding fault recovery method is determined in response to different types of faults, shortening the fault recovery time and ensuring the training stability of the cluster.

Optionally, the fault type may be mapped as a fault level, and each fault level has a corresponding fault recovery method. As an example rather than a limitation, the fault level corresponding to the software fault may be M, and the fault level corresponding to the hardware fault may be N. A fault degree of the software fault is lower than that of the hardware fault, and thus the fault level M may be lower than the fault level N. The fault recovery method corresponding to the fault level M is restarting the abnormal process, and the fault recovery method corresponding to the fault level N is selecting the target standby node and initializing the target standby node.

In detail, the fault level may be determined based on the fault code, and the corresponding fault recovery method may be selected based on the fault level.

Optionally, in the case of a failure for initializing the target standby node or a failure for restarting the abnormal process, the cluster may be scheduled, i.e., another cluster is selected to replace the current cluster and continues to train the model.

Based on the cluster-based training method of the disclosure, an effective training rate for the cluster on the model is greatly improved. The effective training rate may be configured to indicate a percentage of time that is actually contributed to updating model parameters within a desired model training time period. Optionally, the effective training rate of the cluster may be pre-estimated by the following equation:

$$\rho = \alpha - F_{failure} * C_{recovery} - F_{checkpoint} * c$$

where $\rho$ represents an effective training rate; $\alpha$ represents a pre-estimated availability of the cluster; $F_{failure}$ represents a pre-estimated fault frequency of the cluster; $C_{recovery}$ represents a pre-estimated single fault recovery time percentage, and $C_{recovery}$ may be interpreted as a ratio of the single fault recovery time to a pre-estimated training time of the model training task; $F_{checkpoint}$ represents a pre-estimated saving frequency of the training snapshot; and c represents a single pre-estimated save overhead.

It should be noted that after the training node completes the execution of the model training task, the actual values of parameters in the above equation may be obtained and the actual effective training rate of the cluster may be determined.

According to the effective training rate and the training time, the effective training time may be determined. According to the effective training time and an amount of throughput data per unit of time, a total amount of throughput data of the cluster during the execution of the model training task may be determined.

In addition to the training node and the standby node, the cluster also includes a training service node, such as a scheduling node for selecting the target standby node and a monitoring nodes for fault monitoring on the training node. For the training service node, fault monitoring on the training service node may be performed based on a communication state between the training service nodes.

In embodiments of the disclosure, the fault monitoring on the training node is performed. In response to obtaining the fault code of the training node, the fault type of the training node is determined based on the mapping relation between the fault code and the fault type. In response to the hardware fault of the training node, the target standby node is selected from the plurality of standby nodes, and the target training snapshot of the model training task in the training node is obtained. In response to the software fault in the training node, the abnormal process in the training node is determined, and the abnormal process is restarted. Based on this, the disclosure may select corresponding fault recovery method in response to different types of faults, in order to shorten the fault recovery time.

FIG. 4 is a schematic diagram of a cluster-based training apparatus 400 according to an embodiment of the disclosure. The cluster includes a training node for executing a model training task and a plurality of standby nodes.

As illustrated in FIG. 4, the cluster-based training apparatus 400 includes:

a first responding module 401, configured to, in response to a hardware fault in the training node, select a target standby node from the plurality of standby nodes, and obtain a target training snapshot of the model training task in the training node, in which the target training snapshot includes training state data of the model training task; and

an initializing module 402, configured to initialize the target standby node based on a container image of a model training program in the training node and the training state data to replace the training node with the target standby node to continue executing the model training task.

Optionally, the first responding module 401 is configured to:

obtain at least one training snapshot of the model training task in the training node, in which the training snapshot is obtained from the training node based on a target cycle; and
select the target training snapshot from the at least one training snapshot.

Optionally, the apparatus further includes:

a overhead obtaining module, configured to obtain a single pre-estimated save overhead for the training snapshot of the model training task;
a first constructing module, configured to construct a total save overhead function with the target cycle as a variable according to a preset duration and the single pre-estimated save overhead;
a second constructing module, configured to construct an invalid training overhead function with the target cycle as a variable;
a function determining module, configured to determine a target overhead function according to the total save overhead function and the invalid training overhead function; and
a solving module, configured to perform a solving process on the target overhead function to determine the target cycle.

Optionally, the cluster includes a storage node, and the first responding module 401 is configured to:

according to the target cycle, control the training node to save the training snapshot to a memory of the training node based on a first process;
control the training node to read the training snapshot from the memory and save the training snapshot to a solid state drive of the training node based on a second process; and
control the training node to read the training snapshot from the solid state drive and send the training snapshot to the storage node based on a third process.

Optionally, the training snapshot corresponds to an obtaining time, and the first responding module 401 is configured to:

obtain a fault time corresponding to the hardware fault in the training node; and
select a training snapshot with the shortest interval between the corresponding obtaining time and the fault time as the target training snapshot.

Optionally, the standby node is configured to execute other tasks besides the model training task, and the first responding module 401 is configured to:

obtain a priority of each standby node, in which the priority indicates a degree of importance of the other tasks; and
select the target standby node from the plurality of standby nodes based on the priority.

Optionally, the initializing module 402 is configured to:

perform a communication bandwidth verification and/or a silent data error check on the target standby node; and
in response to a success of the communication bandwidth verification and/or the silent data error check, initialize the target standby node.

Optionally, the apparatus further includes:
a second responding module, configured to, in response to a software fault in the training node, determine an abnormal process in the training node and restart the abnormal process.
Optionally, the apparatus further includes:

a fault monitoring module, configured to perform fault monitoring on the training node; and

a type determining module, configured to, in response to obtaining a fault code of the training node, determine a fault type of the training node based on a mapping relation between the fault code and the fault type, in which the fault type includes a hardware fault or a software fault.

Optionally, the apparatus further includes:

a data obtaining module, configured to obtain a pre-estimated availability of the cluster and a pre-estimated amount of fault nodes per unit of time; and

an amount determining module, configured to determine an amount of standby nodes according to the pre-estimated availability and the pre-estimated amount.

It is noted that the foregoing explanatory description of the cluster-based training method is also applicable to the cluster-based training apparatus of the embodiments and will not be repeated herein.

According to the embodiments of the disclosure, the disclosure also provides an electronic device, a readable storage medium, and a computer program product.

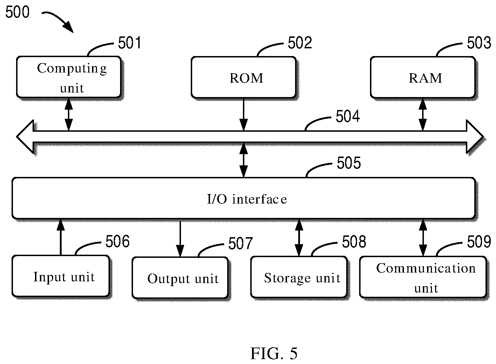

FIG. 5 is a schematic diagram of an exemplary electronic device 500 configured to implement the embodiments of the disclosure. The electronic device 500 is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown here, their connections and relations, and their functions are merely examples, and are not intended to limit the implementations of the disclosure described and/or required herein.

As illustrated in FIG. 5, the electronic device 500 includes a computing unit 501 for executing various appropriate actions and processes based on computer programs stored in a Read-Only Memory (ROM) 502 or computer programs loaded from a storage unit 508 to a Random Access Memory (RAM) 503. In the RAM 503, various programs and data required for the operation of the electronic device 500 may be stored. The computing unit 501, the ROM 502, and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, a mouse; an output unit 507, such as various types of displays, speakers; a storage unit 508, such as a magnetic disk, an optical disk; and a communication unit 509, such as a network card, a modem, and a wireless communication transceiver. The communication unit 509 allows the electronic device 500 to exchange information/data with other devices through a computer network such as the Internet and/or various telecommunication networks.

The computing unit 501 may be various general-purpose and/or dedicated processing components with processing and computing capabilities. Some examples of the computing unit 501 include, but are not limited to, a CPU, a GPU, various dedicated artificial intelligence (AI) computing chips, various computing units that run machine learning (ML) model algorithms, a Digital Signal Processor (DSP), and any appropriate processor, controller and microcontroller. The computing unit 501 executes the various methods and processes described above, such as the cluster-based training method. For example, in some embodiments, the cluster-based training method may be implemented as a computer software program, which is tangibly contained in a machine-readable medium, such as the storage unit 508. In some embodiments, part or all of the computer programs may be loaded and/or installed on the electronic device 500 via the ROM 502 and/or the communication unit 509. When the computer program is loaded on the RAM 503 and executed by the computing unit 501, one or more steps of the cluster-based training method described above may be executed. Alternatively, in other embodiments, the computing unit 501 may be configured to execute the cluster-based training method in any other suitable manner (for example, by means of firmware).

Various implementations of the systems and techniques described above may be implemented by a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), a computer hardware, a firmware, a software, and/or combinations thereof. These various implementations may be implemented in one or more computer programs, the one or more computer programs may be executed and/or interpreted on a programmable system including at least one programmable processor, and the programmable processor may be a dedicated or general programmable processor for receiving data and instructions from the storage system, at least one input apparatus and at least one output apparatus, and transmitting the data and instructions to the storage system, the at least one input apparatus and the at least one output apparatus.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include electrical connections based on one or more wires, portable computer disks, hard disks, RAMs, ROMs, Electrically Programmable Read-Only-Memories (EPROMs), flash memories, fiber optics, Compact Disc Read-Only Memories (CD-ROMs), optical storage devices, magnetic storage devices, or any suitable combination of the foregoing.

In order to provide interaction with a user, the systems and techniques described herein may be implemented on a computer having a display apparatus (such as a Cathode Ray Tube (CRT) or a Liquid Crystal Display (LCD) monitor) for displaying information to a user; and a keyboard and pointing device (such as a mouse or trackball) through which the user can provide input to the computer. Other kinds of apparatuses may also be configured to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that (for example, a data server) includes background components, or a computing system (for example, an application server) that includes middleware components, or a computing system (for example, a user computer with a graphical user interface or a web browser, through which the user can interact with the implementation of the systems and technologies described herein) that includes front-end components, or a computing system that includes any combination of such background components, intermediate computing components, or front-end components. The components of the system may be interconnected by any form or medium of digital data communication (e.g., a communication network). Examples of communication networks include: a Local Area Network (LAN), a Wide Area Network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. The server is a host product in a cloud computing service system to solve difficult management and poor business expansion of traditional physical hosting and Virtual Private Server (VPS) services. The server may also be a server of a distributed system, or a server combined with a block-chain.

It is noted that AI is a subject that causes computers to simulate certain thinking processes and intelligent behaviors (such as learning, reasoning, thinking and planning) of human beings, which covers both hardware-level technologies and software-level technologies. The AI hardware technologies generally include technologies such as sensors, dedicated AI chips, cloud computing, distributed storage, and big data processing. The AI software technologies generally include several major aspects such as a computer vision technology, a speech recognition technology, a natural language processing technology, a machine learning/deep learning, big data processing technology and knowledge graph technology.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

**Claims**

1. A cluster-based training method, wherein the cluster comprises a training node for executing a model training task and a plurality of standby nodes, and the method comprises:

   in response to a hardware fault in the training node, selecting a target standby node from the plurality of standby nodes, and obtaining a target training snapshot of the model training task in the training node, wherein the target training snapshot comprises training state data of the model training task; and
   initializing the target standby node based on a container image of a model training program in the training node and the training state data to replace the training node with the target standby node to continue executing the model training task.

2. The method of claim 1, wherein obtaining the target training snapshot of the model training task in the training node, comprises:

obtaining at least one training snapshot of the model training task in the training node, wherein the training snapshot is obtained from the training node based on a target cycle; and
selecting the target training snapshot from the at least one training snapshot.

3. The method of claim 2, further comprising:

obtaining a single pre-estimated save overhead for the training snapshot of the model training task;
constructing a total save overhead function with the target cycle as a variable according to a set duration and the single pre-estimated save overhead;
constructing an invalid training overhead function with the target cycle as a variable;
determining a target overhead function according to the total save overhead function and the invalid training overhead function; and
determining the target cycle by performing a solving process on the target overhead function.

4. The method of claim 2, wherein the cluster comprises a storage node, and obtaining the at least one training snapshot of the model training task in the training node comprises:

according to the target cycle, controlling the training node to save the training snapshot to a memory of the training node based on a first process;
controlling the training node to read the training snapshot from the memory and save the training snapshot to a solid state drive of the training node based on a second process; and
controlling the training node to read the training snapshot from the solid state drive and send the training snapshot to the storage node based on a third process.

5. The method of claim 2, wherein the training snapshot corresponds to an obtaining time, and selecting the target training snapshot from the at least one training snapshot comprises:

obtaining a fault time corresponding to the hardware fault in the training node; and
selecting a training snapshot with the shortest interval between the corresponding obtaining time and the fault time as the target training snapshot.

6. The method of claim 1, wherein the standby node is configured to execute other tasks besides the model training task, and selecting the target standby node from the plurality of standby nodes comprises:

obtaining a priority of the standby node, wherein the priority indicates a degree of importance of the other tasks; and
selecting the target standby node from the plurality of standby nodes based on the priority.

7. The method of claim 1, wherein initializing the target standby node, comprises:

performing a communication bandwidth verification and/or a silent data error check on the target standby node; and
in response to a success of the communication bandwidth verification and/or the silent data error check, initializing the target standby node.

8. The method of claim 1, further comprising:
in response to a software fault in the training node, determining an abnormal process in the training node and restarting the abnormal process.

9. The method of claim 1 or 8, further comprising:

performing fault monitoring on the training node; and

in response to obtaining a fault code of the training node, determining a fault type of the training node based on a mapping relation between the fault code and the fault type, wherein the fault type comprises a hardware fault or a software fault.

10. The method of any one of claims 1-8, comprising:

obtaining a pre-estimated availability of the cluster and a pre-estimated amount of fault nodes per unit of time; and determining an amount of standby nodes according to the pre-estimated availability and the pre-estimated amount.

11. A cluster-based training apparatus, wherein the cluster comprises a training node for executing a model training task and a plurality of standby nodes, and the apparatus comprises:

a first responding module, configured to, in response to a hardware fault in the training node, select a target standby node from the plurality of standby nodes, and obtain a target training snapshot of the model training task in the training node, wherein the target training snapshot comprises training state data of the model training task; and

an initializing module, configured to initialize the target standby node based on a container image of a model training program in the training node and the training state data to replace the training node with the target standby node to continue executing the model training task.

12. The apparatus of claim 11, wherein the first responding module is configured to:

obtain at least one training snapshot of the model training task in the training node, wherein the training snapshot is obtained from the training node based on a target cycle; and select the target training snapshot from the at least one training snapshot.

13. The apparatus of claim 12, comprising:

a overhead obtaining module, configured to obtain a single pre-estimated save overhead for the training snapshot of the model training task;
a first constructing module, configured to construct a total save overhead function with the target cycle as a variable according to a set duration and the single pre-estimated save overhead;
a second constructing module, configured to construct an invalid training overhead function with the target cycle as a variable;
a function determining module, configured to determine a target overhead function according to the total save overhead function and the invalid training overhead function; and
a solving module, configured to perform a solving process on the target overhead function to determine the target cycle.

14. The apparatus of claim 12, wherein the cluster comprises a storage node, and the first responding module is configured to:

according to the target cycle, control the training node to save the training snapshot to a memory of the training node based on a first process;
control the training node to read the training snapshot from the memory and save the training snapshot to a solid state drive of the training node based on a second process; and
control the training node to read the training snapshot from the solid state drive and send the training snapshot to the storage node based on a third process.

15. The apparatus of claim 12, wherein the training snapshot corresponds to an obtaining time, and the first responding module is configured to:

obtain a fault time corresponding to the hardware fault in the training node; and
select a training snapshot with the shortest interval between the corresponding obtaining time and the fault time as the target training snapshot.

16. The apparatus of claim 11, wherein the standby node is configured to execute other tasks besides the model training task, and the first responding module is configured to:

> obtain a priority of each standby node, wherein the priority indicates a degree of importance of the other tasks; and
> select the target standby node from the plurality of standby nodes based on the priority.

17. The apparatus of claim 11, wherein the initializing module is configured to:

> perform a communication bandwidth verification and/or a silent data error check on the target standby node; and
> in response to a success of the communication bandwidth verification and/or the silent data error check, initialize the target standby node.

18. The apparatus of claim 11, comprising:
a second responding module, configured to, in response to a software fault in the training node, determine an abnormal process in the training node and restart the abnormal process.

19. The apparatus of claim 11 or 18, comprising:

> a fault monitoring module, configured to perform fault monitoring on the training node; and
> a type determining module, configured to, in response to obtaining a fault code of the training node, determine a fault type of the training node based on a mapping relation between the fault code and the fault type, wherein the fault type comprises a hardware fault or a software fault.

20. The apparatus of any one of claims 11-18, comprising:

> a data obtaining module, configured to obtain a pre-estimated availability of the cluster and a pre-estimated amount of fault nodes per unit of time; and
> an amount determining module, configured to determine an amount of standby nodes according to the pre-estimated availability and the pre-estimated amount.

21. An electronic device, comprising:

> at least one processor; and
> a memory communicatively connected to the at least one processor;
> wherein the memory stores instructions executable by the at least one processor, and when the instructions are executed by the at least one processor, the at least one processor is caused to implement the method of any one of claims 1-10.

22. A non-transitory computer-readable storage medium having computer instructions stored thereon, wherein the computer instructions are configured to cause a computer to implement the method of any one of claims 1-10.

23. A computer program product comprising computer programs, wherein when the computer programs are executed by a processor, the method of any one of claims 1-10 is implemented.

in response to a hardware fault in the training node, select a target standby node from the plurality of standby nodes, and obtain a target training snapshot of the model training task in the training node, in which the target training snapshot comprises training state data of the model training task

101

initialize the target standby node based on a container image of a model training program in the training node and the training state data to replace the training node with the target standby node to continue executing the model training task

102

FIG. 1

in response to a hardware fault in the training node, select a target standby node from the plurality of standby nodes, and obtain at least one training snapshot of the model training task in the training node, in which the training snapshot is obtained from the training node based on a target cycle; and select the target training snapshot from at least one training snapshot

201

perform a communication bandwidth verification and/or a silent data error check on the target standby node

202

in response to a success of the communication bandwidth verification and/or the silent data error check, initialize the target standby node based on a container image of a model training program in the training node and the training state data

203

FIG. 2

```
┌─────────────────────────────────────────────────────────────────────┐
│                                                                       │  301
│              perform fault monitoring on the training node            │
│                                                                       │
└─────────────────────────────────────────────────────────────────────┘
                                    │
                                    ▼
┌─────────────────────────────────────────────────────────────────────┐
│  in response to obtaining a fault code of the training node,          │  302
│  determine a fault type of the training node based on a mapping       │
│  relation between the fault code and the fault type, in which         │
│  the fault type includes a hardware fault or a software fault         │
└─────────────────────────────────────────────────────────────────────┘
            │                                           │
            ▼                                           ▼
┌───────────────────────────────┐    303   ┌───────────────────────────────┐  304
│  in response to a hardware     │          │  in response to a software     │
│  fault in the training node,   │          │  fault in the training node,   │
│  select a target standby node  │          │  determine an abnormal         │
│  from the plurality of standby │          │  process in the training node  │
│  nodes, and obtain a target    │          │  and restart the abnormal      │
│  training snapshot of the      │          │  process                       │
│  model training task in the    │          │                                │
│  training node                 │          │                                │
└───────────────────────────────┘          └───────────────────────────────┘
```

FIG. 3

```
┌─────────────────────────────────────────┐
│  cluster-based training apparatus        │
│                                          │
│                        401               │
│        ┌─────────────────────┐           │
│        │   first responding   │           │
│        │       module         │           │
│        └─────────────────────┘           │
│                   │    402               │
│        ┌─────────────────────┐           │
│        │  initializing module │           │
│        └─────────────────────┘           │
│                                          │
└─────────────────────────────────────────┘
```

FIG. 4

500

501
Computing unit

502
ROM

503
RAM

504

505
I/O interface

506
Input unit

507
Output unit

508
Storage unit

509
Communication unit

FIG. 5

Europäisches
Patentamt

European
Patent Office

Office européen
des brevets

## EUROPEAN SEARCH REPORT

Application Number

EP 24 20 2627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/220949 A1 (FENG ANDREW [US] ET AL) 3 August 2017 (2017-08-03) | 1-5,8,9, 11-15, 18,19, 21-23 | INV. G06F11/20 G06N20/00 |
| Y | * figures 1,2,4,5-8 * <br> * paragraph [0037] * <br> * paragraph [0058], [0059] * <br> * paragraph [0044],[0045], [0048] * <br> * paragraph [0077] * <br> ----- | 6,7,10, 16,17,20 | |
| A | US 10 776 208 B2 (EMC IP HOLDING CO LLC [US]) 15 September 2020 (2020-09-15) <br> * figures 1,2,4 * <br> * claim 8 * <br> * first paragraph in section BACKGROUND * <br> * column 7, lines 45-64. * <br> * column 4, lines 13-15; <br> column 6, lines 40-60 * <br> * column 10, lines 20-29 * <br> ----- | 1-23 | |
| X | CN 115 712 830 A (HUAWEI CLOUD COMPUTING TECH CO LTD) 24 February 2023 (2023-02-24) | 1-5,8,9, 11-15, 18,19, 21-23 | TECHNICAL FIELDS SEARCHED (IPC) G06F G06N |
| Y | * claim 1 * <br> * figures 1, 2, 6, 7, 12, 13 * <br> * paragraphs [0008]-[0013] * <br> * paragraphs [0084], [0203] * <br> & EP 4 375 892 A1 (HUAWEI CLOUD COMPUTING TECH CO LTD [CN]) 29 May 2024 (2024-05-29) <br> * claim 1 * <br> * figures 1, 2, 6, 7, 12, 13 * <br> * paragraphs [0008]-[0013] * <br> * paragraphs [0084], [0203] * <br> ----- | 6,7,10, 16,17,20 | |

-/--

The present search report has been drawn up for all claims

| Place of search | Date of completion of the search | Examiner |
|---|---|---|
| Munich | 21 February 2025 | Leineweber, Harald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 24 20 2627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/003313 A1 (RAMIREZ NICK [US]) 1 January 2004 (2004-01-01) * figure 2 * * paragraph [0016] * | 1-23 | |
| Y | US 2013/219224 A1 (KATOU HARUKI [JP]) 22 August 2013 (2013-08-22) * figures 1,2A, 3, 4, 7 * * paragraph [0035]-[0040] * | 6,16 | |
| Y | HOYOUNG HWANG ET AL: "Backup path sharing for survivable ATM networks", INFORMATION NETWORKING, 1998. (ICOIN-12). PROCEEDINGS., TWELFTH INTERN ATIONAL CONFERENCE ON TOKYO, JAPAN 21-23 JAN. 1998, LOS ALAMITOS, CA, USA,IEEE COMPUT. SOC, US, 21 January 1998 (1998-01-21), pages 8-13, XP010265268, DOI: 10.1109/ICOIN.1998.648344 ISBN: 978-0-8186-7225-5 * page 10, right column, 2nd paragraph; figure 7 * | 7,17 | |
| | | | **TECHNICAL FIELDS SEARCHED (IPC)** |
| Y | US 7 434 090 B2 (COPAN SYSTEM INC [US]) 7 October 2008 (2008-10-07) * Teaches selecting a spare disk if a failure of a given disk is detected, the selection being based on bandwidth checks.; figure 7 * * claims 1, 20 * | 6,16 | |
| Y | US 7 930 137 B2 (KOREA ELECTRONICS TELECOMM [KR]) 19 April 2011 (2011-04-19) * claim 1 * * figures 4, 6, 10 * * section SUMMARY, 2nd paragraph * | 10,20 | |

The present search report has been drawn up for all claims

| Place of search | Date of completion of the search | Examiner |
|---|---|---|
| Munich | 21 February 2025 | Leineweber, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 2627

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| US 2017220949 | A1 | 03-08-2017 | TW | 201740319 A | 16-11-2017 |
| | | | US | 2017220949 A1 | 03-08-2017 |
| | | | US | 2021342747 A1 | 04-11-2021 |
| | | | WO | 2017132428 A1 | 03-08-2017 |
| US 10776208 | B2 | 15-09-2020 | NONE | | |
| CN 115712830 | A | 24-02-2023 | CN | 115712830 A | 24-02-2023 |
| | | | EP | 4375892 A1 | 29-05-2024 |
| | | | US | 2024193477 A1 | 13-06-2024 |
| | | | WO | 2023020355 A1 | 23-02-2023 |
| US 2004003313 | A1 | 01-01-2004 | NONE | | |
| US 2013219224 | A1 | 22-08-2013 | JP | 5948933 B2 | 06-07-2016 |
| | | | JP | 2013171301 A | 02-09-2013 |
| | | | US | 2013219224 A1 | 22-08-2013 |
| US 7434090 | B2 | 07-10-2008 | NONE | | |
| US 7930137 | B2 | 19-04-2011 | KR | 20090060910 A | 15-06-2009 |
| | | | US | 2009150717 A1 | 11-06-2009 |

EPO FORM P0459

For more details about this annex : see Official Journal of the European Patent Office, No. 12/82